# EUROPÄISCHE PATENTANMELDUNG

(11) **EP 3 875 926 A1**
(43) Veröffentlichungstag der Anmeldung: **08.09.2021**
(21) Anmeldenummer: 20160741.3
(22) Anmeldetag: 03.03.2020
(51) Int. Cl.: G01H 11/02

(54) **BEARBEITUNGSVORRICHTUNG MIT MESSVORRICHTUNG UND VERFAHREN ZUM BETREIBEN EINER BEARBEITUNGSVORRICHTUNG**

(71) Anmelder: Telsonic Holding AG, 9552 Bronschhofen (CH)
(72) Erfinder: Solenthaler, Peter, 9543 St. Margarethen (CH)
(74) Vertreter: Hepp Wenger Ryffel AG

(57) **Zusammenfassung**

Offenbart ist eine Bearbeitungsvorrichtung (30) zum Bearbeiten von Werkstücken mittels Schwingungen, insbesondere eine Ultraschallschweissvorrichtung (30). Die Bearbeitungsvorrichtung (30) enthält mindestens eine schwingende Komponente (10; 13) mit einem Schwingbereich (11), mindestens eine Messvorrichtung (20) zum berührungslosen Bestimmen einer Messgrösse, die eine Schwingungseigenschaft, insbesondere die Schwingungsamplitude und/oder die Schwingungsfrequenz und/oder die Position des Schwingungsnullpunkts, des Schwingbereichs (11) der schwingenden Komponente (10; 13) charakterisiert. Die Messvorrichtung (20) bzw. mindestens eine der Messvorrichtungen (20) enthält ein Gehäuse (27), eine im Gehäuse (27) angeordnete elektromagnetische Quelle (21) zum Erzeugen eines insbesondere zeitlich veränderlichen primären elektromagnetischen Feldes (E1; B1) im Schwingbereich (11) und/oder in einer Umgebung des Schwingbereichs (11) im Bereich einer zumindest einen Teil der Oberfläche des Schwingbereichs (11) bildenden Messfläche (12), einen im Gehäuse (27) angeordneten Sensor (22) zum Bestimmen eines Messsignals, welches abhängig ist von einem aufgrund der Schwingung des Schwingbereichs (11) erzeugten sekundären elektromagnetischen Feld (E2; B2), eine im Gehäuse (27) angeordnete Auswerteeinheit (23) zum Bestimmen einer Messgrösse, die die Schwingungsamplitude des Schwingbereichs (11) charakterisiert, aus dem Messsignal. Weiterhin offenbart ist ein Verfahren zum Betreiben einer solchen Bearbeitungsvorrichtung (30).

## Beschreibung

Die vorliegende Anmeldung betrifft eine Bearbeitungsvorrichtung zum Bearbeiten von Werkstücken mittels Schwingungen sowie ein Verfahren zum Betreiben einer solchen Bearbeitungsvorrichtung. Die Bearbeitungsvorrichtung enthält eine Messvorrichtung zum berührungslosen Bestimmen einer Messgrösse, die eine Schwingungseigenschaft, insbesondere die Schwingungsamplitude und/oder die Schwingungsfrequenz und/oder die Position des Schwingungsnullpunkts, eines Schwingbereichs eines schwingenden Gegenstandes charakterisiert. Bei dem schwingenden Gegenstand kann es sich beispielsweise um eine Ultraschallsonotrode handeln, die etwa zum Ultraschallschweissen eingesetzt werden kann. Weiterhin betrifft die Erfindung ein Verfahren zum Betreiben einer solchen Bearbeitungsvorrichtung.

Ultraschallsonotroden, die beispielsweise zum Ultraschallschweissen oder zum ultraschallunterstützten Sieben eingesetzt werden, müssen Schwingungen mit einer definierten Amplitude ausführen, damit reproduzierbare und qualitativ ausreichende Ergebnisse erreicht werden können. Diese Amplitude kann im Bereich von wenigen Mikrometern oder sogar darunter liegen. Mit den aus dem Stand der Technik bekannten Verfahren ist die Amplitude im Leerlauf nur schwer und unter Last praktisch gar nicht zu messen.

Das Dokument WO 2005/116593 A1 offenbart ein Verfahren zum Messen und/oder Regeln der Schwingungsamplitude eines Ultraschallschwingers mithilfe eines Sensors. Der Sensor kann zum Beispiel ein induktiv arbeitender und/oder kapazitiv arbeitender Sensor sein und an einem Konverter, einem Booster, einer Sonotrode, einem Gehäuse oder einer Lagerung des Schwingers angeordnet sein. Ein Ausführungsbeispiel zeigt einen Sensor, der in oder an einem Konverter integriert oder angeordnet ist. In einem weiteren Ausführungsbeispiel ist ein Sensor dargestellt, der in einem Booster integriert ist. Noch ein weiteres Ausführungsbeispiel enthält einen Sensor, der in einer Sonotrode festgespannt ist.

Das Dokument US 2004/0004106 A1 offenbart Verfahren zur optischen, kapazitiven oder induktiven Messung und Regelung der Amplitude einer Ultraschallsonotrode. Der bauliche Aufwand der Messvorrichtung ist jedoch sehr gross. Zudem lässt sich die Messvorrichtung nicht ohne Weiteres in verschiedenen schwingenden Systemen einsetzen.

Es ist eine Aufgabe der vorliegenden Erfindung, eine Bearbeitungsvorrichtung mit einer Messvorrichtung bereitzustellen, die baulich kompakter ist. Zudem sollen bevorzugt Schwingungsamplituden und andere Schwingungseigenschaften, wie beispielsweise Schwingungsfrequenzen, eines schwingenden Gegenstandes möglichst genau gemessen werden können. Dies soll insbesondere dann möglich sein, wenn der schwingende Gegenstand belastet wird. Beispielsweise sollen die Schwingungseigenschaften einer Ultraschallsonotrode während des Ultraschallschweissens möglichst genau bestimmt werden können.

In einem ersten Aspekt der Erfindung werden diese und weitere Aufgaben gelöst durch eine Bearbeitungsvorrichtung zum Bearbeiten von Werkstücken mittels Schwingungen, insbesondere eine Ultraschallschweissvorrichtung. Die Bearbeitungsvorrichtung enthält
- mindestens eine schwingende Komponente mit einem Schwingbereich, der insbesondere mit einem Werkstück in Kontakt bringbar ist, um das Werkstück zu Schwingungen anzuregen,
- mindestens eine Messvorrichtung zum berührungslosen Bestimmen einer Messgrösse, die eine Schwingungseigenschaft, insbesondere die Schwingungsamplitude und/oder die Schwingungsfrequenz und/oder die Position des Schwingungsnullpunkts, des Schwingbereichs der schwingenden Komponente charakterisiert,
wobei die Messvorrichtung enthält:
- ein Gehäuse,
- eine im Gehäuse angeordnete elektromagnetische Quelle zum Erzeugen eines insbesondere zeitlich veränderlichen primären elektromagnetischen Feldes im Bereich einer zumindest einen Teil der Oberfläche des Schwingbereichs bildenden Messfläche,
- einen im Gehäuse angeordneten Sensor zum Bestimmen eines Messsignals, welches abhängig ist von einem aufgrund der Schwingung des Schwingbereichs erzeugten sekundären elektromagnetischen Feld,
- eine im Gehäuse angeordnete Auswerteeinheit zum Bestimmen einer Messgrösse, die die Schwingungseigenschaft des Schwingbereichs charakterisiert, aus dem Messsignal.

Die Anordnung der elektromagnetische Quelle, des Sensors und der Auswerteeinheit in einem gemeinsamen Gehäuse sorgt für eine kompakte Bauweise. Zudem kann die Messvorrichtung als in sich geschlossenes Modul in einer Vielzahl verschiedener Bearbeitungsvorrichtungen verwendet werden.

Weitere Vorteile eines gemeinsamen Gehäuses sind eine vereinfachte Verdrahtung und Platzierung, eine geringere Störanfälligkeit und eine vereinfachte Fehlersuche. Ausserdem ist die Wartung vereinfacht und Komponenten können einfacher ausgetauscht oder nachgerüstet werden.

Das Gehäuse kann beispielsweise eine Dimension, insbesondere eine Länge, von höchstens 80 mm, bevorzugt höchstens 45 mm, weiter bevorzugt höchstens 40 mm, besonders bevorzugt höchstens 20 mm aufweisen. Es kann beispielsweise einen Durchmesser von 8 mm aufweisen. Die Messvorrichtung kann eine im Gehäuse integrierte aktive Fläche aufweisen, aus der das primäre elektromagnetische Feld austritt und die bevorzugt an einer senkrecht zu einer Längsachse des Gehäuses ausgerichteten Stirnseite angeordnet sein. Die aktive Fläche kann einen Durchmesser von beispielsweise 6 mm haben. Durch die vorgenannten Dimensionen ergibt sich eine besonders kompakte Bauweise der Messvorrichtung.

Die elektromagnetische Quelle kann in an sich bekannter Weise einen Schwingkreis zur Erzeugung des primären elektromagnetischen Feldes enthalten.

Die Messvorrichtung beziehungsweise mindestens eine Messvorrichtungen kann zum induktiven Bestimmen der Messgrösse ausgebildet sein und weiterhin enthalten:
- einen Magnetfelderzeuger zum Erzeugen eines zeitlich veränderlichen primären Magnetfeldes im Schwingbereich und damit eines induzierten elektrischen Stroms im Schwingbereich,
- einen Magnetfeldsensor zum Bestimmen eines durch den induzierten elektrischen Strom erzeugten sekundären Magnetfeldes.

Eine induktive Messung ist insbesondere dann vorteilhaft, wenn der schwingende Gegenstand aus einem ferritischen Material besteht.

Alternativ oder zusätzlich kann die Messvorrichtung beziehungsweise mindestens eine Messvorrichtungen zum kapazitiven Bestimmen der Messgrösse ausgebildet sein und weiterhin enthalten:
- zwei Elektroden, zwischen denen eine elektrische Spannung, insbesondere eine Wechselspannung, anlegbar ist, so dass in der Umgebung der Elektroden und des Schwingbereichs ein zumindest aufgrund der Schwingungen des Schwingbereichs zeitlich veränderliches primäres elektrisches Feld erzeugt wird,
- einen Stromsensor zum Bestimmen eines durch das zeitlich veränderliche sekundäre elektrische Feld zwischen den Elektroden erzeugten elektrischen Stroms.

Eine kapazitive Messung ist insbesondere dann vorteilhaft, wenn der schwingende Gegenstand aus einem nicht ferritischen Material besteht. Im Falle einer kapazitiven Messung ist es besonders vorteilhaft, wenn die Elektroden galvanisch vom schwingenden Gegenstand getrennt sind. Dies verhindert unerwünschte Artefakte bei der Messung.

Das primäre elektromagnetische Feld kann unter deinem Winkel zur Messfläche verlaufen, der im Bereich von 60° bis 120°, bevorzugt von 70° bis 110°, besonders bevorzugt von 80° bis 100° liegt.

Die aktive Fläche des Messvorrichtung verläuft bevorzugt unter einem Winkel zur Messfläche, der höchstens 30°, bevorzugt höchstens 20°, besonders bevorzugt höchstens 10° beträgt. Ganz besonders bevorzugt verläuft die aktive Fläche parallel zur Messfläche. Hierdurch kann die aktive Fläche besonders nah an die Messfläche herangeführt werden, wodurch die Rücckopplung besonders hoch ist.

Besonders bevorzugt ist es, wenn die Messvorrichtung schwingungsmässig von der schwingenden Komponente entkoppelt ist. Auf diese Weise wird verhindert, dass die Schwingungen die Messung beeinträchtigen. Bei einer solchen Entkopplung konnte in Versuchen eine Messgenauigkeit von unter 1 % erzielt werden.

Die Messvorrichtung kann weiterhin auch ein Kommunikationsmodul oder einen Sender enthalten, mit dem die Messgrössen insbesondere drahtlos gesendet werden können, beispielsweise an ein mobiles Endgerät, auf dem die Messgrössen dargestellt werden können. Zur Energieversorgung kann die Messvorrichtung eine Batterie aufweisen oder über ein Kabel mit Strom versorgt werden.

Die schwingende Komponente kann eine Ultraschallsonotrode sein, deren Schwingbereich durch einen Sonotrodenkopf gebildet ist. In diesem Fall kann die Messgrösse beispielsweise die Schwingungsamplitude und/oder die Schwingungsfrequenz und/oder die Position des Schwingungsnullpunkts des Sonotrodenkopfs charakterisieren.

Die Messfläche kann beispielsweise parallel oder senkrecht zu einer Hauptschwingungsrichtung, insbesondere einer Längsschwingungsrichtung, des schwingenden Gegenstandes verlaufen. Beispielsweise kann der schwingende Gegenstand eine linear schwingende Sonotrode sein, insbesondere eine Hammerkopfsonotrode.

Alternativ kann es sich bei dem schwingenden Gegenstand um eine an sich bekannte Torsionssonotrode handeln. In diesem Fall verläuft die Messfläche bevorzugt senkrecht zu einer Torsionsachse der Torsionssonotrode.

Die Ultraschallsonotrode kann eine Schweissfläche aufweisen, wobei bevorzugt die Messfläche von der Schweissfläche beabstandet ist und insbesondere senkrecht hierzu verläuft. Eine senkrechte Anordnung der Messfläche zur Schweissfläche ist besonders dann vorteilhaft, wenn es sich bei der Sonotrode um eine linear schwingende Sonotrode oder um eine Hammerkopfsonotrode handelt.

Insbesondere wenn der Bauraum keine Messung an der Ultraschallsonotrode zulässt, kann eine Frequenz auch an einem Konverter oder einem Booster gemessen werden.

Alternativ kann es sich bei der schwingenden Komponente um einen Amboss handeln.

Einige praxisrelevante schwingende Gegenstände bestehen im Wesentlichen aus Materialien (beispielsweise aus Aluminium, Titan oder gewissen Keramiken), in denen nur vergleichsweise geringe induzierte Ströme entstehen. In diesen Anwendungen ist es vorteilhaft, zumindest den Schwingbereich im Bereich der Messfläche mit einem Einsatz oder einer Beschichtung aus einem geeigneten Material zu versehen, das grössere induzierte Ströme und damit grössere sekundäre elektromagnetische Felder erzeugt. Die genannten Einsätze oder Beschichtungen bestehen bevorzugt aus einem permanentmagnetischen Material.

Die primären elektromagnetischen Felder können von einem statischen Magnetfeld überlagert werden, das beispielsweise von einem Permanentmagneten erzeugt werden kann. Der Permanentmagnet ist bevorzugt kein Teil der Messvorrichtung und ist insbesondere nicht in dessen Gehäuse angeordnet. Stattdessen ist er bevorzugt so angeordnet, dass sich der Schwingbereich des schwingenden Gegenstandes zwischen der Messeinrichtung und dem Permanentmagneten befindet. Ein Permanentmagnet ist besonders dann vorteilhaft, wenn es sich bei dem schwingenden Gegenstand um eine Torsionssonotrode handelt.

In einem zweiten Aspekt betrifft die Erfindung auch ein Verfahren zum Betreiben einer erfindungsgemässen Bearbeitungsvorrichtung. Dieses Verfahren enthält die folgenden Schritte:
a) Bearbeiten eines Werkstücks mit der Bearbeitungsvorrichtung,
b) vor, während oder nach dem Bearbeiten im Schritt a): berührungsloses Bestimmen einer Ist-Messgrösse, die eine Schwingungseigenschaft, insbesondere die Schwingungsamplitude und/oder die Schwingungsfrequenz und/oder die Position des Schwingungsnullpunkts, des Schwingbereichs der schwingenden Komponente charakterisiert,
c) Vergleich der Ist-Messgrösse mit einer vorgegebenen oder vorgebbaren Soll-Messgrösse,
d) gegebenenfalls Anpassung mindestens eines Betriebsparameters der Bearbeitungsvorrichtung in Abhängigkeit vom Vergleich im Schritt c).

Schritt b) kann die folgenden Teilschritte enthalten:
b1) Erzeugen eines insbesondere zeitlich veränderlichen primären elektromagnetischen Feldes im Bereich einer einen der Teil der Oberfläche des Schwingbereichs bildenden Messfläche,
b2) Bestimmen eines Messsignals, welches abhängig ist von einem aufgrund der Schwingung des Schwingbereichs erzeugten sekundären elektromagnetischen Feld,
b3) Bestimmen der Messgrösse aus dem Messsignal.

Das primäre elektromagnetische Feld kann unter einem Winkel zur Messfläche verlaufen, der im Bereich von 60° bis 120°, bevorzugt von 70° bis 110°, besonders bevorzugt von 80° bis 100° liegt.

In einer möglichen Ausführungsform kann die Bestimmung der Messgrösse beziehungsweise der mindestens einen Messgrösse induktiv erfolgen, und zwar indem
- im Schritt b1) im Schwingbereich ein zeitlich veränderliches primäres Magnetfeld und damit ein induzierter elektrischer Stroms erzeugt wird,
- im Schritt b2) ein Messsignal bestimmt wird, welches abhängig ist von einem durch den induzierten elektrischen Strom erzeugten sekundären Magnetfeld.

Wird der Schwingbereich des Gegenstandes zu Schwingungen angeregt, so werden darin Wirbelströme induziert. Aufgrund des sekundären elektromagnetischen Feldes wird dem Oszillator Energie entzogen. Hieraus resultiert eine Pegeländerung. Diese kann im Fall einer digitalen Messvorrichtung beispielweise über einen Schmitt-Trigger eine Ausgangsstufe schalten oder ein analoges Ausgangssignal beeinflussen. Die Bestimmung der Messgrösse aus dem Messsignal im Schritt c) kann auf an sich bekannte Weise über einen Strom oder eine Spannung erfolgen.

Alternativ oder zusätzlich kann die Bestimmung der Messgrösse beziehungsweise mindestens einer der Messgrössen kapazitiv erfolgen, und zwar indem
- im Schritt b1) zwischen zwei Elektroden eine elektrische Spannung angelegt wird, so dass in der Umgebung des Schwingbereichs ein zumindest aufgrund der Schwingungen des Schwingbereichs zeitlich veränderliches primäres elektrisches Feld erzeugt wird,
- im Schritt b2) ein Messsignal bestimmt wird, welches abhängig ist von einem durch das zeitlich veränderliche primäre elektrische Feld erzeugten sekundären elektrischen Feld, wobei insbesondere als Messsignal ein Strom bestimmt wird, der durch das sekundäre elektrische Feld induziert wird.

Eine kapazitive Messung ist insbesondere dann vorteilhaft, wenn der schwingende Gegenstand aus einem ferritischen Material besteht.

Bei der zwischen den Elektroden angelegten Spannung handelt es sich bevorzugt um eine Wechselspannung. Es ist jedoch auch möglich und liegt im Rahmen der Erfindung, dass es sich um eine Gleichspannung handelt.

Die Schwingungsamplitude kann im Bereich von 0,1 µm bis 3000 µm liegen, beispielsweise im Bereich von 5 µm bis 100 µm für das Ultraschallschweissen. Insbesondere bei Schwingungsamplituden am unteren Ende dieses Bereichs erweist sich das erfindungsgemässe Verfahren als besonders präzise gegenüber den bekannten Verfahren. Der Gegenstand kann mit einer Frequenz schwingen, die im Bereich 10 Hz bis 1 MHz liegt. Somit kann das Verfahren unter anderem für das Ultraschallschweissen oder auch für das Vibrationsschweissen eingesetzt werden, wofür Frequenzen im Bereich von 15 kHz bis 40 kHz beziehungsweise im Bereich von 50 Hz bis 500 Hz verwendet werden können. In aller Regel ist es vorteilhaft, wenn bei kleineren Schwingungsfrequenzen die Schwingungsamplituden grösser sind und bei grösseren Schwingungsfrequenzen die Schwingungsamplituden kleiner sind.

Überdies können die primären elektromagnetischen Felder durch das von einem Permanentmagneten erzeugtes Magnetfeld ergänzt werden.

Die Echtzeitmessung während der Bearbeitung von Werkstücken ermöglicht eine zeitnahe Steuerung und/oder Regelung, was eine qualitativ hochwertige und homogene Prozessführung ermöglicht. Die Steuerung und/oder Regelung kann manuell erfolgen oder automatisiert werden. Die Messung kann beispielsweise nach dem Wechsel eines schwingenden Gegenstandes, etwa einer Ultraschallsonotrode, oder nach dem Wechsel zu einem anderen Bearbeitungsprozess erfolgen. Abweichungen der gemessenen Frequenzen und Amplituden können mit Referenzwerten verglichen werden. Übersteigt die Abweichung einen vorgegebenen oder vorgebbaren Schwellenwert, so kann eine Warnmeldung ausgegeben werden oder der Prozess abgebrochen werden. Die Messgrössen können zusammen mit den Betriebsbedingungen der Bearbeitungsvorrichtung aufgenommen und gespeichert werden, so dass aufgrund dieser Daten eine Dokumentation oder eine statistische Auswertung erfolgen kann.

Nachfolgend wird die Erfindung an Hand einiger Ausführungsbeispiele und Zeichnungen näher erläutert. Dabei zeigen:
- Figur 1:: ein erstes Ausführungsbeispiel einer erfindungsgemässen Bearbeitungsvorrichtung mit einer Messvorrichtung zur induktiven Messung der Schwingungseigenschaften einer Ultraschallsonotrode an einer senkrecht zur Schwingungsrichtung angeordneten Messfläche,
- Figur 2:: ein erstes Ausführungsbeispiel einer erfindungsgemässen Bearbeitungsvorrichtung mit einer Messvorrichtung zur induktiven Messung der Schwingungseigenschaften einer Ultraschallsonotrode an einer parallel zur Schwingungsrichtung angeordneten Messfläche,
- Figur 3:: ein drittes Ausführungsbeispiel einer erfindungsgemässen Bearbeitungsvorrichtung mit einer Messvorrichtung zur kapazitiven Messung der Schwingungseigenschaften einer Ultraschallsonotrode an einer senkrecht zur Schwingungsrichtung angeordneten Messfläche,
- Figur 4:: ein viertes Ausführungsbeispiel einer erfindungsgemässen Bearbeitungsvorrichtung mit einer Messvorrichtung zur induktiven Messung der Schwingungseigenschaften einer Ultraschallsonotrode an einer senkrecht zur Schwingungsrichtung angeordneten Messfläche mit zusätzlichem Permanentmagnet.
- Figur 5:: ein fünftes Ausführungsbeispiel einer erfindungsgemässen Bearbeitungsvorrichtung mit einer Messvorrichtung zur induktiven Messung der Schwingungseigenschaften eines Ambosses.

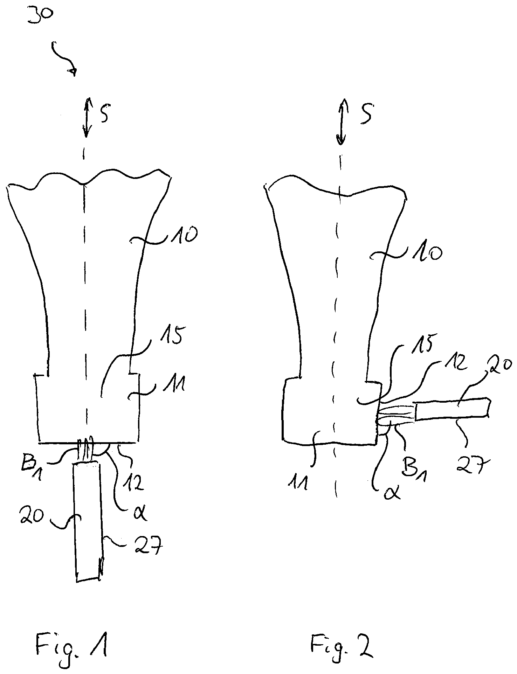

In Figur 1 ist ein Teil einer Bearbeitungsvorrichtung 30 mit einer Ultraschallsonotrode in Form einer so genannten Hammerkopfsonotrode 10 dargestellt, die in einer Schwingungsrichtung S zu Längsschwingungen anregbar ist. Die Sonotrode 10 enthält einen Sonotrodenkopf 11, der einen Schwingbereich darstellt. Der Sonotrodenkopf 11 weist eine Schweissfläche 15 auf, die mit einem hier nicht dargestellten Werkstück in Kontakt bringbar ist, um dieses zu Schwingungen anzuregen und beispielsweise mit einem weiteren Werkstück zu verschweissen. Für das Ultraschallschweissen kann die Sonotrode 10 beispielsweise mit einer Frequenz im Bereich von 15 kHz bis 40 kHz schwingen und eine Schwingungsamplitude im Bereich von 5 µm bis 100 µm aufweisen. Senkrecht zur Schwingungsrichtung S und auch zur Schweissfläche 15 verfügt die Sonotrode 10 über eine Messfläche 12.

Die Bearbeitungsvorrichtung 30 enthält weiterhin eine in einem Gehäuse 27 aufgenommene Messvorrichtung 20 zum berührungslosen, induktiven Bestimmen einer Messgrösse, die die Schwingungsamplitude und die Schwingungsfrequenz des Sonotrodenkopfs 11 charakterisiert. Zu diesem Zweck enthält die Messvorrichtung 20 eine elektromagnetische Quelle in Form eines Magnetfelderzeugers, mit dem ein zeitlich veränderliches Magnetfeld B1 im Bereich der Messfläche 12 erzeugt werden kann. Dieses verläuft unter einem Winkel α zur Messfläche, der im Bereich von 60° bis 120° liegt.

Wird die Sonotrode 10 zu Schwingungen angeregt, so erzeugen diese im Zusammenwirken mit dem primären Magnetfeld B1 ein zeitabhängiges sekundäres Magnetfeld, welches durch den elektrischen Strom erzeugt wird, der seinerseits durch das primäre Magnetfeld B1 induziert wird. Zum Bestimmen eines Messsignals, welches von diesem sekundären Magnetfeld abhängt, enthält die Messvorrichtung 20 weiterhin einen Sensor. Ausserdem verfügt die Messvorrichtung 20 über eine Auswerteeinheit, mit der aus dem Messsignal eine Messgrösse bestimmt werden kann, die die Schwingungsamplitude des Sonotrodenkopfs 11 charakterisiert. Um eine möglichst präzise Messung zu erreichen, ist die Messvorrichtung 20 schwingungsmässig von der Sonotrode 10 entkoppelt.

Das Ausführungsbeispiel gemäss Figur 2 unterscheidet sich von dem in Figur 1 gezeigten darin, dass die Messfläche 12 der Sonotrode 10 hier parallel zur Schwingungsrichtung S verläuft.

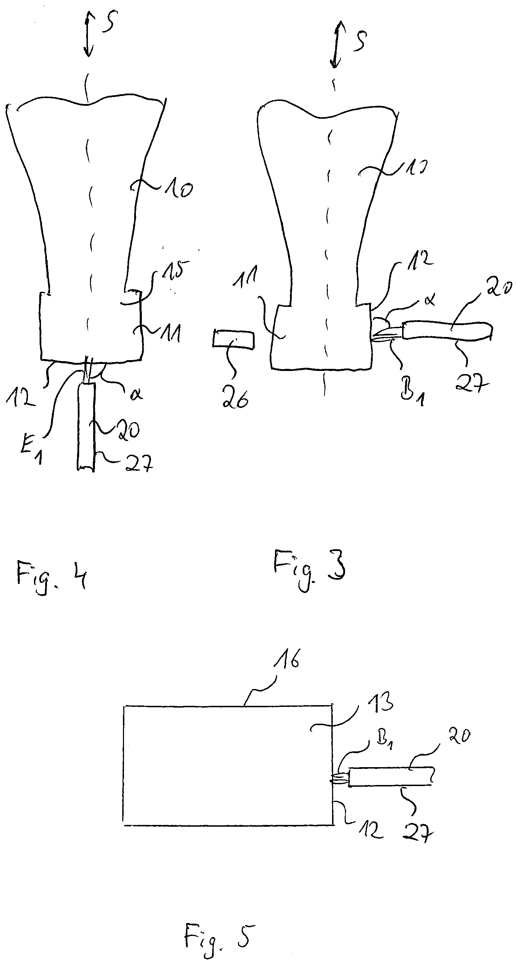

Das in Figur 3 dargestellte Ausführungsbeispiel enthält eine Messvorrichtung 20 zur kapazitiven Messung. Sie verfügt über zwei Elektroden, zwischen denen eine elektrische Wechselspannung anlegbar ist, so dass ein primäres elektrisches Feld E1 erzeugt wird. Auf diese Weise wird in der Umgebung der Elektroden und des Sonotrodenkopfs 11 ein zumindest aufgrund der Schwingungen des Sonotrodenkopfs 11 zeitlich veränderliches sekundäres elektrisches Feld erzeugt. Des Weiteren enthält die Messvorrichtung 20 in diesem Ausführungsbeispiel einen Stromsensor zum Bestimmen eines durch das zeitlich veränderliche sekundäre elektrische Feld zwischen den Elektroden erzeugten elektrischen Stroms.

Die Figur 4 zeigt ein weiteres Ausführungsbeispiel, in dem zusätzlich zur Messvorrichtung 20 ein Permanentmagnet 26 vorgesehen ist, welcher derart angeordnet ist, sich der Sonotrodenkopf 11 zwischen der Messvorrichtung 20 und dem Permanentmagnet 26 befindet. Die hier gezeigte Anordnung ist auch vorteilhaft, wenn die Sonotrode eine Torsionssonotrode ist.

In Figur 5 ist ein zu Ultraschallschwingungen angeregter Amboss 13 dargestellt. Dieser enthält eine Gegenfläche 16, die mit einem hier nicht dargestellten Werkstück in Kontakt bringbar ist.

## Patentansprüche

1. Bearbeitungsvorrichtung (30) zum Bearbeiten von Werkstücken mittels Schwingungen, insbesondere Ultraschallschweissvorrichtung (30), enthaltend
- mindestens eine schwingende Komponente (10; 13) mit einem Schwingbereich (11), der insbesondere mit einem Werkstück in Kontakt bringbar ist, um das Werkstück zu Schwingungen anzuregen,
- mindestens eine Messvorrichtung (20) zum berührungslosen Bestimmen einer Messgrösse, die eine Schwingungseigenschaft, insbesondere die Schwingungsamplitude und/oder die Schwingungsfrequenz und/oder die Position des Schwingungsnullpunkts, des Schwingbereichs (11) der schwingenden Komponente (10; 13) charakterisiert,
wobei die Messvorrichtung (20) bzw. mindestens eine der Messvorrichtungen (20) enthält:
- ein Gehäuse (27),
- eine im Gehäuse (27) angeordnete elektromagnetische Quelle zum Erzeugen eines insbesondere zeitlich veränderlichen primären elektromagnetischen Feldes (E1; B1) im Bereich einer zumindest einen Teil der Oberfläche des Schwingbereichs (11) bildenden Messfläche (12),
- einen im Gehäuse (27) angeordneten Sensor zum Bestimmen eines Messsignals, welches abhängig ist von einem aufgrund der Schwingung des Schwingbereichs (11) erzeugten sekundären elektromagnetischen Feld,
- eine im Gehäuse (27) angeordnete Auswerteeinheit zum Bestimmen einer Messgrösse, die die Schwingungseigenschaft des Schwingbereichs (11) charakterisiert, aus dem Messsignal.

2. Bearbeitungsvorrichtung (30) gemäss Anspruch 2, wobei die Messvorrichtung (20) bzw. mindestens eine der Messvorrichtungen (20) zum induktiven Bestimmen der Messgrösse ausgebildet ist und weiterhin enthält:
- einen Magnetfelderzeuger zum Erzeugen eines zeitlich veränderlichen primären Magnetfeldes (B1) im Schwingbereich (11) und damit eines induzierten elektrischen Stroms im Schwingbereich (11),
- einen Magnetfeldsensor zum Bestimmen eines durch den induzierten elektrischen Strom erzeugten sekundären Magnetfeldes.

3. Bearbeitungsvorrichtung (30) gemäss einem der Ansprüche 1 und 2,
wobei die Messvorrichtung (20) bzw. mindestens eine der Messvorrichtungen (20) zum kapazitiven Bestimmen der Messgrösse ausgebildet ist und weiterhin enthält:
- zwei Elektroden, zwischen denen eine elektrische Spannung, insbesondere eine Wechselspannung, anlegbar ist, so dass in der Umgebung der Elektroden und des Schwingbereichs (11) ein zumindest aufgrund der Schwingungen des Schwingbereichs (11) zeitlich veränderliches primäres elektrisches Feld (E1) erzeugt wird,
- einen Stromsensor zum Bestimmen eines durch das zeitlich veränderliche sekundäre elektrische Feld zwischen den Elektroden erzeugten elektrischen Stroms.

4. Bearbeitungsvorrichtung (30) gemäss Anspruch 3,
wobei die Elektroden galvanisch vom schwingenden Gegenstand (10; 13) getrennt sind.

5. Bearbeitungsvorrichtung (30) gemäss einem der Ansprüche 1 bis 4,
wobei die schwingende Komponente eine Ultraschallsonotrode (10) der Bearbeitungsvorrichtung (30) ist.

6. Bearbeitungsvorrichtung (30) gemäss Anspruch 5,
wobei die Messgrösse die Schwingungsamplitude und/oder die Schwingungsfrequenz und/oder die Position des Schwingungsnullpunkts der Ultraschallsonotrode (10) charakterisiert.

7. Bearbeitungsvorrichtung (30) gemäss einem der Ansprüche 1 bis 6,
wobei die Messvorrichtung (20) schwingungsmässig von der schwingenden Komponente (10; 13) entkoppelt ist.

8. Verfahren zum Betreiben einer Bearbeitungsvorrichtung (30) gemäss einem der Ansprüche 1 bis 6, enthaltend die folgenden Schritte:
a) Bearbeiten eines Werkstücks mit der Bearbeitungsvorrichtung (30),
b) vor, während oder nach dem Bearbeiten im Schritt a):
berührungsloses Bestimmen einer Ist-Messgrösse, die eine Schwingungseigenschaft, insbesondere die Schwingungsamplitude und/oder die Schwingungsfrequenz und/oder die Position des Schwingungsnullpunkts, des Schwingbereichs (11) der schwingenden Komponente (10; 13) charakterisiert,
c) Vergleich der Ist-Messgrösse mit einer vorgegebenen oder vorgebbaren Soll-Messgrösse,
d) gegebenenfalls Anpassung mindestens eines Betriebsparameters der Bearbeitungsvorrichtung (30) in Abhängigkeit vom Vergleich im Schritt c).

9. Verfahren gemäss Anspruch 7,
wobei Schritt b) die folgenden Teilschritte enthält:
b1) Erzeugen eines insbesondere zeitlich veränderlichen primären elektromagnetischen Feldes (E1; B1) im Bereich einer zumindest einen Teil der Oberfläche des Schwingbereichs (11) bildenden Messfläche (12),
b2) Bestimmen eines Messsignals, welches abhängig ist von einem aufgrund der Schwingung des Schwingbereichs (11) erzeugten sekundären elektromagnetischen Feld,
b3) Bestimmen der Messgrösse aus dem Messsignal.

10. Verfahren gemäss Anspruch 8,
wobei das primäre elektromagnetische Feld (E1; B1) unter einem Winkel (α) zur Messfläche (12) verläuft, der im Bereich von 60° bis 120°, bevorzugt von 70° bis 110°, besonders bevorzugt von 80° bis 100° liegt.

11. Verfahren gemäss Anspruch 9,
wobei die Bestimmung der Messgrösse bzw. mindestens einer der Messgrössen induktiv erfolgt, indem
- im Schritt b1) im Schwingbereich (11) ein zeitlich veränderliches primäres Magnetfeld (B1) und damit ein induzierter elektrischer Stroms erzeugt wird,
- im Schritt b2) ein Messsignal bestimmt wird, welches abhängig ist von einem durch den induzierten elektrischen Strom erzeugten sekundären Magnetfeld.

12. Verfahren gemäss einem der Ansprüche 8 bis 10,
wobei die Bestimmung der Messgrösse bzw. mindestens einer der Messgrössen kapazitiv erfolgt, indem
- im Schritt b1) zwischen zwei Elektroden eine elektrische Spannung, insbesondere eine Wechselspannung, angelegt wird, so dass in der Umgebung des Schwingbereichs (11) ein zumindest aufgrund der Schwingungen des Schwingbereichs (11) zeitlich veränderliches primäres elektrisches Feld (E1) erzeugt wird,
- im Schritt b2) ein Messsignal bestimmt wird, welches abhängig ist von einem durch das zeitlich veränderliche primäre elektrische Feld (E1) erzeugten sekundären elektrischen Feld, wobei insbesondere als Messsignal ein Strom bestimmt wird, der durch das sekundäre elektrische Feld induziert wird.

13. Verfahren gemäss einem der Ansprüche 8 bis 12,
wobei die Schwingungsamplitude im Bereich von 0,1 µm bis 3000 µm liegt, beispielsweise im Bereich von 5 µm bis 100 µm.

14. Verfahren gemäss einem der Ansprüche 8 bis 13,
wobei der Gegenstand (10; 13) mit einer Frequenz schwingt, die im Bereich von 10 Hz bis 1 MHz liegt, beispielsweise im Bereich von 15 kHz bis 40 kHz oder im Bereich von 50 Hz bis 500 Hz.

15. Verfahren gemäss Anspruch 14,
wobei der Gegenstand eine Ultraschallsonotrode (10) mit einer Schweissfläche (12) ist und die Messfläche (12) von der Schweissfläche (12) beabstandet ist und insbesondere senkrecht hierzu verläuft.
